# EUROPÄISCHE PATENTSCHRIFT

(11) **EP 0 641 699 B1**
(45) Veröffentlichungstag und Bekanntmachung des Hinweises auf die Patenterteilung: **03.01.2001**
(21) Anmeldenummer: 94113688.9
(22) Anmeldetag: 01.09.1994
(51) Int. Cl.: B60T 13/40

(54) **Pneumatische Bremseinrichtung**
Pneumatic braking installation
Installation pneumatique de freinage

(30) Priorität: 01.09.1993 DE 4329481
(43) Veröffentlichungstag der Anmeldung: 08.03.1995
(73) Patentinhaber: Motzener Strasse 25 Grundstücks GmbH & Co. Besitz KG, D-12277 Berlin (DE)
(72) Erfinder: Inozemtsev, Vladimir, Prof., RF-129224 MOskau (RU)
(74) Vertreter: Beetz & Partner Patentanwälte

(56) Entgegenhaltungen:
- CH-A- 623 001
- DE-B- 2 702 855
- DE-C- 701 963
- FR-A- 2 172 452

## Beschreibung

Die Erfindung betrifft eine pneumatische, vorzugsweise indirekt gesteuerte, Bremseinrichtung für Schienenfahrzeuge, bestehend aus mindestens einem Vorratsluftbehälter, mindestens einem pneumatischen Bremszylinder und mindestens einem Steuerventil zur Steuerung der Füllung und Entlüftung des Bremszylinders, das ein an die Hauptluftleitung angeschlossenes Zweidruckventil zur Erzeugung eines Steuerdrucks für die Bremszylinder mittels einer festen Füll- bzw. Ladedrossel aufweist.

Pneumatische Bremseinrichtungen für Schienenfahrzeuge, insbesondere Eisenbahnzüge, weisen im allgemeinen einen am Triebfahrzeug vorgesehenen Drucklufterzeuger auf, der über ein Führerbremsventil eine den gesamten Zug durchlaufende Hauptluftleitung speist. Über das Führerbremsventil wird zum Einleiten eines Bremsvorgangs der Druck in der Hauptluftleitung abgesenkt und zum Lösen der Bremse erhöht. Die Bremsanlage jedes Waggons enthält mindestens ein an die Hauptluftleitung angeschlossenes Steuerventil, das in Abhängigkeit von einer Druckänderung in der Hauptluftleitung die Füllung und Entlüftung der entsprechenden Bremszylinder steuert. Die zum Füllen der Bremszylinder benötigte Druckluft wird aus Vorratsbehältern an jedem Waggon entnommen. Bei unerwünschter Zugtrennung oder Beschädigungen der Hauptluftleitung wird infolge der Absenkung des Hauptleitungsdruckes selbsttätig eine Bremsung eingeleitet.

Aus der DE-PS 487 044 und der DE-PS 701 963 sind mehrlösige Einkammer-Druckluftbremsen bekannt, die eine als Steuerventil bezeichnete Ventilanordnung mit einem Haupt- und einem Nebensteuerventil aufweisen. Das Hauptsteuerventil ist als Zweidruckventil mit einem beweglichen Steuerkolben ausgebildet, der eine Hauptkammer von einer Steuerkammer abtrennt. Der Steuerkolben ist mit einem Stellschieber verbunden, über den die Steuerkammer entlüftet, gefüllt oder mit dem Nebensteuerventil verbunden werden kann. Die Hauptkammer des Zweidruckventils ist mit der Hauptluftleitung durch einen Zweigkanal verbunden, während die Steuerkammer über einen Füllkanal mit Drosselwirkung mit der Hauptluftkammer, d. h. mit der Hauptluftleitung in Verbindung steht. Das vom Zweidruckventil angesteuerte Nebensteuerventil ist als Dreidruckventil ausgebildet und enthält zwei miteinander verbundene Differentialkolben bzw. Membranen sowie ein von diesen betätigtes Ventil, das die Bremszylinderfüllung aus einem Vorratsbehälter bzw. die Bremszylinderentlüftung steuert. Einer der Differentialkolben bzw. Membranen wird einerseits mit einem konstanten Steuerdruck und andererseits mit dem in der Steuerkammer des Zweidruckventils herrschenden Druck beaufschlagt, während der andere Kolben bzw. die Membran auf einer Seite unter Atmosphärendruck und auf der anderen Seite unter Bremszylinderdruck steht. Durch eine derartige Anordnung wird eine stufenweise Veränderung des Bremszylinderdrucks nicht nur beim Bremsen, sondern auch beim Lösen ermöglicht. Ein Nachteil dieses bekannten Steuerventils ist darin zu sehen, daß die Lösezeit der Bremse nicht nur von der Schnelligkeit der Erhöhung des Lösedrucks in der Steuerkammer des Zweidruckventils, sondern auch von der Größe des in der Hauptluftleitung einzustellenden Lösedrucks abhängt. Da zwischen der Hauptluftleitung und der Steuerkammer eine unveränderliche Fülldrossel angeordnet ist, hängt der in die Steuerkammer eingeführte Volumenstrom der Druckluft von der Druckdifferenz ab, die sich vor und nach der Fülldrossel einstellt. Die Größe dieser Druckdifferenz ist bei den bekannten Bremsanlagen nicht konstant, sondern ändert sich mit den Druckänderungen z. B. in der Hauptdruckleitung. So steigt beim Beginn der Bremslösung der Hauptleitungsdruck am Zugkopf wesentlich schneller und auf einen höheren Wert als am Ende des Zuges an. Daher werden die zum Lösen der Bremsen gewünschten Druckwerte in der Steuerkammer der Steuerventile am Zuganfang schneller als am Zugende erreicht. Dies trifft auch für die über eine Drossel mit der Hauptluftleitung verbundenen Vorratsbehälter zu. Während beim Beginn des Lösevorgangs die am Zugkopf aus der Hauptluftleitung in die Vorratsbehälter und die Steuerkammern der Steuerventile einströmende Druckluftmenge relativ groß ist, steht am Ende des Zuges eine vergleichsweise geringere Druckluftmenge zur Verfügung. Daher folgen die Wagen am Zuganfang immer schneller einer Reduzierung der Bremskraft als am Zugende. Ein späterer Lösebeginn am Zugende kann insbesondere bei langen Zügen zu dynamischen Reaktionen innerhalb des gesamten Zugverbandes und zu dadurch bedingten hohen Zugkräften an den Kupplungen führen. Darüber hinaus weist dieses Steuerventil die gleiche Füllzeit des Vorratsbehälters in einer Personenzugstellung oder einer Güterzugstellung auf, was die Wirksamkeit der Bremsanlage in der Personenzugstellung herabsetzt.

Aus der DE-PS 27 02 855 ist eine Druckluftbremseinrichtung für Schienenfahrzeuge bekannt, die ein Steuerventil mit einem dem Bremszylinder zugeordneten Dreidruckventil aufweist. Zur Optimierung der Füllung des Vorratsbehälters mit Druckluft beim Lösen und Aufladen der Bremseinrichtung enthält dieses Steuerventil ein zusätzliches Füllventil, wie dies beispielsweise aus der DE-PS 26 45 575 bekannt ist. Dieses Füllventil ist als spezielles Dreidruckventil mit einem zwischen der Hauptluftleitung und dem Vorratsbehälter angeordneten Absperrventil ausgebildet. Dieses Absperrventil wird in Schließrichtung durch eine Feder, einen durch den Bremszylinderdruck gegen Atmosphärendruck beaufschlagten ersten Kolben und einen durch den Vorratsbehälterdruck entgegen einem konstanten Bezugsdruck beaufschlagten zweiten Kolben belastet. Beim Lösen der Bremse steuert dieses Füllventil unter dem Einfluß des Steuerkammer-, Vorratsbehälter- und Bremszylinderdrucks die Nachfüllung des Vorratsbehälters im entsprechenden Verhältnis zum Druckabfall im Bremszylinder. Bis zu einem bestimmten Druck wird der Vorratsbehälter aus der Hauptluftleitung über das geöffnete Absperrventil gefüllt. Nach Erreichen des bestimmten Druckwertes schließt das Absperrventil und die weitere Füllung des Vorratsbehälters erfolgt gedrosselt durch eine Düse. Dadurch wird der langsam verlaufende Prozeß der endgültigen Druckerhöhung in der Hauptluftleitung bis zum Lösedruck nicht weiter durch Luftabsaugen in die Vorratsbehälter verzögert. In der gesamten Hauptluftleitung werden die Druckwerte schnell ausgeglichen, womit die Vollösung schneller erfolgt. Dieses Füllventil erfordert jedoch eine aufwendige Konstruktion des Steuerventils.

Aus der CH-PS 623 001 ist ein Steuerventil für eine Druckluftbremse bekannt, das ein mit dem Bremszylinder verbundenes Dreidruckventil enthält. Zur Gewährleistung einer gleichmäßigen Lösung der Bremsen über der gesamten Zuglänge weist dieses Steuerventil zwei unterschiedliche Rückschlagventile für die Aufladung des Vorratsbehälters auf. Jedes Rückschlagventil schließt eine entsprechende Drosselöffnung vorgegebener Größe. Das durch eine kleinere Federkraft beaufschlagte Rückschlagventil schließt eine kleinere Drosselöffnung, während das durch eine größere Federkraft beaufschlagte Rückschlagventil eine größere Drosselöffnung schließt. Beim Lösen der Bremse wird das Rückschlagventil mit der kleineren Drosselöffnung durch den hohen Luftdruck in der Hauptluftleitung im Zugkopf geöffnet, während im Zugschluß das Rückschlagventil mit der größeren Drosselöffnung öffnet. Dadurch wird der Vorratsbehälter im Zugkopf später als im Zugschluß beladen, was zum Ausgleich der Bremslösung in der Länge des Zuges führt. Jedoch hängt die Lösezeit der Bremse vom Druckwert vor der Drossel ab. Je höher der Druckwert ist, desto kleiner ist die Füllzeit des Vorratsbehälters.

Aufgabe der Erfindung ist es, eine ein- oder mehrlösige Bremsanlage für Schienenfahrzeuge zu schaffen, bei der die insbesondere beim Lösen der Bremsen auftretenden Nachteile bekannter Bremsanlagen vermieden werden und die einen stets gleichförmigen Ablauf der Lösevorgänge der einzelnen Bremsen unabhängig von dem jeweiligen Lösedruck in der Hauptluftleitung, eine Verkürzung der Lösezeit der Bremsanlage des gesamten Zuges und eine verbesserte Aufladung der Vorratsbehälter der Bremseinrichtungen ermöglicht.

Diese Aufgabe wird erfindungsgemäß dadurch gelöst, daß das Steuerventil eine dem Zweidruckventil zugeordnete Druckdifferenzhalteeinrichtung aufweist, die bei jedem Lösevorgang die Druckdifferenz an der Ladedrossel auf einem vorgegebenen Wert hält.

Die mit der Erfindung erzielten Vorteile bestehen insbesondere darin, daß aufgrund der konstanten Druckdifferenz an der Ladedrossel beim Lösen der Bremseinrichtung eine vom Druck in der Hauptluftleitung unabhängige, konstante Druckluftmenge in der Steuerkammer des Zweidruckventils strömen kann. Dadurch wird eine konstante Schnelligkeit des Druckanstiegs in der Steuerkammer und im Vorratsbehälter der Steuerventile unabhängig vom Hauptleitungsdruck gewährleistet. Auch über der gesamten Zuglänge wird somit eine gleichmäßigere Druckerhöhung in den Steuerkammern und über die Dreidruckventile eine gleichmäßigere Lösung der entsprechenden Bremszylinder erreicht. Ein Überladen der Steuerkammern und Vorratsbehälter am Zuganfang im Verhältnis zu den Steuerkammern und Vorratsbehältern am Zugende wird vermieden. Die Lösezeit der Bremseinrichtung kann verkürzt und die dynamischen Reaktionen in dem Zugverband können beim Lösen der Bremse herabgesetzt werden.

Ein weiterer Vorteil der Erfindung ist darin zu sehen, daß auch bereits vorhandene Bremseinrichtungen jederzeit entsprechend der erfindungsgemäßen Ausführung nachrüstbar sind, wodurch deren Betriebseigenschaften verbessert werden.

In einer zweckmäßigen Ausgestaltung der Erfindung weist die Druckdifferenzhalteeinrichtung eine Membran auf, deren eine Seite von einer Feder und dem Druck im Steuerraum beaufschlagt wird und auf deren andere Seite der vor der Ladedrossel herrschende Druck einwirkt. Diese Membran ist mit einem Ventilglied fest verbunden, das die Verbindung zur Hauptluftleitung steuert.

In einer weiteren zweckmäßigen Ausgestaltung ist ein Vorratsbehälter an den mit der Ladedrossel verbundenen Raum der Druckdifferenzhalteeinrichtung angeschlossen, um eine gleichmäßigere Aufladung bzw. Befüllung des Vorratsbehälters zu erreichen.

In einer weiteren vorteilhaften Ausgestaltung der Erfindung ist zwischen der Druckdifferenzhalteeinrichtung und der Ladedrossel eine von Hand betätigbare Stelleinrichtung mit einem Absperrventil und einer dazu parallelgeschalteten Drossel angeordnet, die je nach Schaltstellung des Absperrventils eine unterschiedliche Ladezeit der Steuerkammer und des Vorratsbehälters für Personen- oder Güterzugbetrieb ermöglicht.

Die Erfindung kann bei mehrlösigen und bei einlösigen Bremsanlagen angewandt werden, wobei eine Umstellvorrichtung vorgesehen sein kann, die eine Anpassung von einlösigem Betrieb auf mehrlösigen Betrieb - oder umgekehrt - ermöglicht.

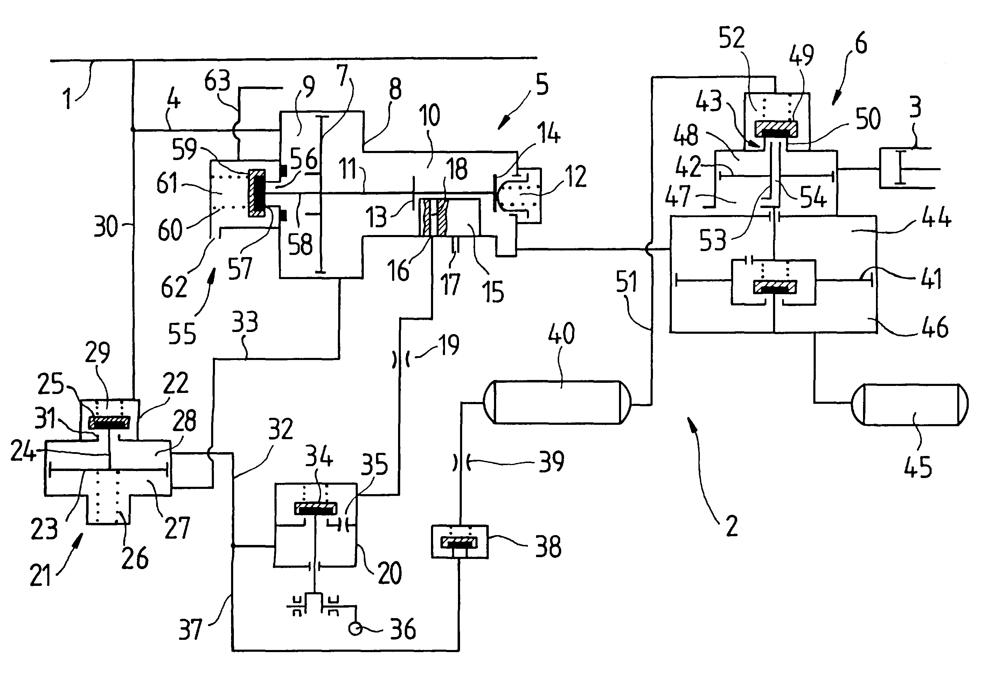

Weitere Vorteile und Besonderheiten der Erfindung ergeben sich aus der folgenden Beschreibung eines bevorzugten Ausführungsbeispiels anhand der Zeichnung, in der eine Bremseinrichtung schematisch im Blockschaltbild dargestellt ist.

Die dargestellte Bremseinrichtung enthält eine von einem Drucklufterzeuger über ein Führerbremsventil gespeiste Hauptluftleitung 1, an die mindestens eine in üblicher Weise pauschal als Steuerventil 2 bezeichnete Ventilanordnung zur Steuerung der Füllung und Entlüftung eines zugehörigen Bremszylinders 3 in Abhängigkeit von den in der Hauptluftleitung 1 herbeigeführten Druckveränderungen angeschlossen ist. Das Steuerventil 2 weist ein mit der Hauptluftleitung 1 über eine Zweigleitung 4 verbundenes Zweidruckventil 5 zur Ansteuerung eines dem entsprechenden Bremszylinder 3 zugeordneten Dreidruckventils 6 auf.

Das Zweidruckventil 5 enthält einen beweglichen Steuerkolben oder eine Membran 7, die in einem Gehäuse 8 eine Hauptkammer 9 von einer Steuerkammer 10 trennt. An der in der Zeichnung rechten Seite der Membran 7 ist eine Schubstange 11 befestigt, die sich mit ihrem freien Ende an einem Federglied 12 abstützt und an der zwei Mitnehmer 13, 14 angeordnet sind. Ein in der Steuerkammer 10 vorgesehener Steuerschieber 15 wird durch eine Bewegung der Membran 7 von den Mitnehmern 13, 14 mit vorgegebenem geringem Totgang in eine von drei Funktionsstellungen verschoben. In der Steuerkammer 10 ist eine Einlaßöffnung 16 und eine Auslaßöffnung 17 vorgesehen, die von dem Steuerschieber 15 geöffnet oder gesperrt werden. In einer Stellung des Steuerschiebers 15 sind beide Öffnungen geschlossen. Wenn sich der Steuerschieber 15 in der in der Zeichnung dargestellten rechten Stellung befindet, stellt eine im Steuerschieber 15 angeordnete Bohrung 18 eine Verbindung zwischen der Einlaßöffnung 16 und der Steuerkammer 10 her. Bewegt sich der Steuerschieber 15 von der Mittelstellung aus nach links, wird die Auslaßöffnung 17 geöffnet.

Die Hauptkammer 9 des Zweidruckventils 5 ist mit der Hauptluftleitung 1 über die ungedrosselte Zweigleitung 4 verbunden. Die Einlaßöffnung 16 der Steuerkammer 10 ist über eine Ladedrossel 19, einen Betriebsart-Umschalter 20 und eine im folgenden als Druckwaage bezeichnete Druckdifferenzhalteeinrichtung 21 mit der Hauptluftleitung 1 verbunden.

Die Druckwaage 21 weist in einem Gehäuse 22 eine bewegliche Zwischenwand 23 auf, die über eine Stange 24 mit einem federbelasteten Ventilglied 25 zusammenwirkt. Die Membran 23 wird von der Kraft einer Feder 26 in Öffnungsrichtung des Ventilglieds 25 beaufschlagt und begrenzt mit dem Gehäuse 22 zwei Räume 27 und 28. Das federbelastete Ventilglied 25 begrenzt mit dem Gehäuse 22 einen weiteren Raum 29, der mit der Hauptluftleitung 1 über eine Zweigleitung 30 verbunden ist. Das Ventilglied 25 bildet zusammen mit einem gehäusefesten Ventilsitz 31 einen über die Membran gesteuerten Durchlaß zwischen den Räumen 28 und 29. Von dem Raum 28 der Druckwaage 21 führt ein Kanal 32 über den Betriebsart-Umschalter 20 und die Ladedrossel 19 zu der schiebergesteuerten Einlaßöffnung 16 der Steuerkammer 10, während der Raum 27 über einen Kanal 33 direkt mit der Steuerkammer 10 in Verbindung steht. Der in der Leitung 32 zwischen dem Raum 28 und der Ladedrossel 19 vorgesehene Betriebsart-Umschalter 20 enthält ein Ventil 34 und eine dazu parallelgeschaltete Drossel 35. Die Größe der Drossel 35 ist kleiner als die Größe der Ladedrossel 19. Das Ventil 34 hat zwei Stellungen, in die es mittels eines Griffs 36 gebracht werden kann. Die in der Zeichnung dargestellte geöffnete Stellung entspricht einer Personenzugstellung "P", in der das Auffüllen der Bremse durch die Größe der Ladedrossel 19 bestimmt wird. In einer Güterzugstellung "G" ist das Ventil 34 geschlossen und die Auffüllung wird durch die Größe der Drossel 35 bestimmt.

Von dem mit dem Raum 28 verbundenen Kanal 32 zweigt eine Leitung 37 ab, die über ein Rückschlagventil 38 und eine weitere Drossel 39 zu einem Vorratsbehälter 40 führt.

Das dem Bremszylinder 3 zugeordnete und über das Zweidruckventil 5 angesteuerte Dreidruckventil 6 enthält zwei miteinander verbundene bewegliche Membranen oder Differentialkolben 41, 42 und ein von diesen betätigtes Zweisitzventil 43, das die Entlüftung des Bremszylinders 3 bzw. dessen Befüllung aus dem Vorratsbehälter 40 steuert. Die größere Membran 41 trennt eine mit der Steuerkammer 10 des Zweidruckventils 5 verbundene Kammer 44 von einer mit einem Steuerluftbehälter 45 verbundenen Kammer 46 ab. Die kleinere Membran 42 trennt eine mit der Atmosphäre verbundene Kammer 47 von einer mit dem Bremszylinder 3 verbundenen Kammer 48 ab. Das Zweisitzventil 43 umfaßt einen federbelasteten Ventilteller 49, der zusammen mit einem gehäusefesten Ventilsitz 50 ein Einlaßventil zwischen einem mit dem Vorratsbehälter 40 über eine Leitung 51 verbundenen Raum 52 und der mit dem Bremszylinder 3 verbundenen Kammer 48 bildet. Der Ventilteller 49 bildet darüber hinaus zusammen mit einem über die Membranen 41, 42 gesteuerten Ventilstößel 53 mit Durchgangsbohrung 54 ein Entlüftungsventil zwischen der mit dem Bremszylinder 3 verbundenen Kammer 48 und der Atmosphäre. Durch dieses Dreidruckventil 6 kann entsprechend einer im Zweidruckventil 5 erzeugten Druckänderung eine stufenweise Veränderung des Bremszylinderdrucks sowohl beim Bremsen als auch beim Lösen der Bremse erreicht werden.

Die in der Zeichnung dargestellte Bremseinrichtung funktioniert folgenderweise:

Im aufgeladenen Zustand der Bremseinrichtung herrschen in den Kammern 9 und 10 des Zweidruckventils 5, in den Kammern 44 und 46 des Dreidruckventils 6 sowie in den Räumen 27 und 28 der Druckwaage 21 die gleichen Druckwerte. Der Steuerschieber 15 befindet sich in einer Stellung, in der die Auslaßöffnung 17 geschlossen und die Einlaßöffnung 16 über die Bohrung 18 mit der Steuerkammer 10 verbunden sind. Das zwischen dem Ventilglied 49 und dem gehäusefesten Ventilsitz 50 gebildete Einlaßventil ist geschlossen, während das zwischen dem Ventilglied 49 und der Durchgangsbohrung 54 im Ventilstößel 53 gebildete Auslaßventil geöffnet ist. Dadurch ist der Bremszylinder 3 über die Durchgangsbohrung 54 mit der Atmosphäre verbunden.

Zum Bremsen wird der Druck in der Hauptluftleitung 1, in der Hauptkammer 9 des Zweidruckventils 5 und über das geöffnete Ventilglied 25 im Raum 28 der Druckwaage 21 abgesenkt. Durch den verminderten Druck in der Hauptkammer 9 wird die Membran 7 in der Zeichnung nach links bewegt, weil sich der Druck in der Steuerkammer 10 wegen der Wirkung der Ladedrossel 19 verzögert abbaut. Der Steuerschieber 15 wird von der Membran 7 mitgenommen, sperrt die mit der Ladedrossel 19 verbundene Einlaßöffnung 16 und öffnet die Auslaßöffnung 17. Dadurch wird der Druck in der Steuerkammer 10 und auch in der Kammer 44 des Dreidruckventils 6 abgesenkt. Durch den absinkenden Druck in der Steuerkammer 10, bewegt sich die Membran 7 mit dem Steuerschieber 15 in die Ausgangsstellung zurück, in der die Steuerkammer 10 und die Kammer 44 des Dreidruckventils 6 von der Atmosphäre getrennt sind. In den Räumen 27 und 28 der Druckwaage 21 herrschen dieselben Druckwerte. Der Druckabfall in der Steuerkammr 10 und in der Kammer 44 bewirkt im Dreidruckventil 6, daß der Druck im Steuerluftbehälter 45 die Membranen 41 und 42 anhebt. Dadurch wird zunächst das Entlüftungsventil geschlossen und anschließend das Einlaßventil geöffnet, das den Bremszylinder 3 mit dem Vorratsbehälter 40 verbindet. Der Druck im Bremszylinder 3 steigt und mit ihm auch der Druck in der Kammer 48. Wenn die durch den Bremszylinderdruck auf die kleinere Membran 42 wirkende Kraft die durch den Druckunterschied in den Kammern 44 und 46 gegebene Kraft übersteigt, werden die Membranen wieder etwas nach unten bewegt, wodurch das Einlaßventil die Verbindung des Vorratsbehälters 40 mit dem Bremszylinder absperrt. Bei weiterer Druckabsenkung in der Hauptluftleitung 1 wiederholt sich der Vorgang.

Zum Lösen der Bremse wird der Druck in der Hauptluftleitung 1 erhöht. Dadurch steigt auch der Druck in der Hauptkammer 9 an, wodurch sich die Membran 7 mit dem Steuerschieber 15 in die in der Zeichnung gezeigte rechte Stellung bewegt. Dabei stellt der Steuerschieber 15 über die Bohrung 18 eine Verbindung zwischen der Steuerkammer 10 und dem die Ladedrossel 19 enthaltenden Kanal 32 her. Falls der Luftdruck in der Hauptluftleitung 1 und in der mit dieser verbundenen Hauptkammer 9 wesentlich höher als der Luftdruck in der Steuerkammer 10 ist, verschiebt sich die Membran 7 aus der in der Zeichnung gezeigten Stellung zusammen mit dem Schieber 15 weiter nach rechts, und drückt gegen das Federglied 12, wodurch die Einlaßöffnung 16 direkt mit der Steuerkammer 10 verbunden wird. Durch den erhöhten Druck in der Hauptluftleitung 1 steigt auch der Druck im Raum 29 der Druckwaage 21, der über die Zweigleitung 30 mit der Hauptluftleitung 1 verbunden ist. Da in diesem Zustand das Ventilglied 25 von seinem Ventilsitz 31 abgehoben ist und damit eine Strömungsverbindung von dem Raum 29 zum Raum 28 besteht, erhöht sich auch der Druck in diesem Raum 28, wodurch die Membran 23 gegen die Kraft der Feder 26 und gegen den noch geringeren Druck im Raum 27 ausgelenkt und das mit der Membran 23 verbundene Ventilglied 25 in Schließrichtung bewegt wird, was ein zeitlich begrenztes Sperren bzw. eine Drosselung der zuströmenden Druckluft im Ventil 25, 31 bewirkt. Der Druck im Raum 28 herrscht auch im Kanal 32 stromauf der Ladedrossel 19, in welcher ein vorbestimmter Druckabfall erzeugt wird. Die Druckluft strömt aufgrund der Druckdifferenz an der Ladedrossel über die Bohrung 18 des Steuerschiebers 15 in die Steuerkammer 10 des Zweidruckventils 5 und aus diesem in die Kammer 44 des Dreidruckventils 6. Dieser den Steuerdruck für das Dreidruckventil 6 bildende Druck in der Steuerkammer 10 wird über den Kanal bzw. die Leitung 33 auch in den die Feder 26 enthaltenden Druckraum 27 der Druckwaage 21 übertragen und bewirkt in Verbindung mit der Kraft der Feder 26 eine Auslenkbewegung der Membran 23 und des angeschlossenen Ventilglieds 25 in Öffnungsrichtung, so daß der Raum 28 und damit auch der Kanal 32 wieder in Strömungsverbindung zum Raum 29 gebracht wird. Bei der in der Zeichnung dargestellten Ausführung wiederholen sich diese Vorgänge derart, daß beim Auffüllen der Bremsanlage die Druckdifferenz an der Ladedrossel 19 unabhängig von der Größe des Druckwertes in der Hauptluftleitung 1 konstant gehalten wird. Entsprechende Wirkungen lassen sich auch mit anderen Ventilanordnungen mit kontinuierlicher Steuerfunktion erzielen.

In der dargestellten Druckwaage 21 stellt sich an der Membran 23 ein Kräftegleichgewicht zwischen der Kraft der Feder 26 zusammen mit der vom Druck im Raum 27 erzeugten Kraft auf der einen Seite und der vom Druck im Raum 28 auf die Membran 23 ausgeübten Kraft auf der anderen Seite ein. Aufgrund dieser Gleichgewichtsbedingung ergibt sich an der Ladedrossel 19 ein Druckgefälle, das von der Federkraft bestimmt und konstant gehalten wird.

Steigt z. B. der Druck in der Hauptluftleitung 1, bewegt sich das Ventil 25, 31 in Schließrichtung. Dabei verringert es die zur Ladedrossel 19 fließende Druckluftmenge so weit, bis die Druckdifferenz wieder auf den konstanten Wert korrigiert ist. Wenn die Druckdifferenz an der Ladedrossel 19 konstant ist, ist auch der Volumenstrom über die Ladedrossel 19 konstant. Dadurch wird eine konstante Schnelligkeit des Druckanstiegs in der Steuerkammer 10 und im Vorratsbehälter 40 bei wiederholten Lösevorgängen der Bremse unabhängig vom Hauptleitungsdruck erreicht. Die vorstehend beschriebene Bremseinrichtung gewährleistet somit gleichbleibend kurze Lösezeiten und gleichzeitig ein schnelleres Auffüllen der Vorratsbehälter im Langzeitbetrieb und bei eventuell durch äußere Einflüsse verursachten Schwankungen des Hauptleitungsdrucks. Von besonderer Bedeutung ist die erfindungsgemäße Bremseinrichtung für lange Züge, bei denen eine Vielzahl von Verbrauchern, insbesondere die Bremseinrichtung der einzelnen Waggons an eine durchgehende Hauptluftleitung angeschlossen sind. Aufgrund der automatischen Einstellung der konstanten Druckdifferenz in den Bremseinrichtungen des Zugverbandes, unabhängig vom Druckwert im jeweiligen Abschnitt der Hauptluftleitung wird der Lösedruck in den Steuerkammern der Steuerventile mit gleicher Geschwindigkeit erhöht, was ein gleichmäßigeres Lösen aller Bremsen des Zugverbandes bedeutet, solange das Führerbremsventil den notwendigen Luftdruckwert in der Hauptluftleitung sichert.

Bei dem in der Zeichnung dargestellten Ausführungsbeispiel ist das Zweidruckventil 5 mit einem besonderen Druckminderer 55 ausgestattet, durch den der Druck in der Hauptkammer 9 schnell abgesenkt werden kann. Zu diesem Zweck ist in der Stirnwand der Hauptkammer 9 eine Öffnung 56 mit einem Ventilsitz 57 ausgebildet, dem ein mit der Membran 7 z. B. über eine Stange 58 fest verbundenes Ventilglied 59 zugeordnet ist. Bei einer Verschiebung der Membran 7 durch eine Druckabsenkung in der Hauptkammer 9 öffnet das Ventilglied 59 gegen die Kraft einer Feder 60, so daß die Druckluft aus der Hauptkammer 9 in einen Druckraum 61 und aus diesem entweder durch einen Auslaß 62 oder durch einen Kanal 63 abströmen kann. Durch das Öffnen des Ventilglieds 59 kann der Druck in der Hauptkammer 9 beschleunigt bis unter den Steuerkammerdruck abgesenkt werden, was eine stabile Positionierung des Steuerschiebers 15 in der linken Endstellung bewirkt.

Die Druckdifferenzhalteeinrichtung 21 kann in dem Ventilblock des Steuerventils 2 integriert sein, was hinsichtlich geringer Gesamtabmessungen und der Plazierung des Steuerventils am Fahrzeugunterbau sowie auch zum Erhalt kurzer Strömungswege vorteilhaft ist. Insbesondere zum Nachrüsten bestehender Bremssysteme kann die Druckdifferenzhalteeinrichtung 21 in Verbindung mit dem Zweidruckventil 5 als gesondertes Bauteil ausgebildet sein und durch Druckleitungen mit der Hauptluftleitung 1 verbunden sein.

## Patentansprüche

1. Pneumatische Bremseinrichtung für Schienenfahrzeuge, bestehend aus
- mindestens einem Vorratsluftbehälter (40),
- mindestens einem pneumatischen Bremszylinder (3), und
- mindestens einem Steuerventil (2) zur Steuerung der Füllung und Entlüftung des Bremszylinders (3), das ein an eine Hauptluftleitung (1) angeschlossenes Zweidruckventil (5) zur Erzeugung eines Steuerdrucks für die Bremszylinder (3) mittels einer festen Füll- bzw. Ladedrossel (19) aufweist,
**dadurch gekennzeichnet,**
daß das Steuerventil (2) eine dem Zweidruckventil (5) zugeordnete Druckdifferenzhalteeinrichtung (21) aufweist, die bei jedem Lösevorgang die Druckdifferenz an der Ladedrossel (19) auf einem vorgegebenen Wert hält.

2. Bremseinrichtung nach Anspruch 1,
dadurch gekennzeichnet,
daß die Druckdifferenzhalteeinrichtung (21) eine Membran (23) aufweist, die einerseits durch eine Feder (26) und den Druck in einer Steuerkammer (10) des Zweidruckventils (5) sowie andererseits durch den Druck stromauf der Ladedrossel (19) beaufschlagt ist und mit einem Ventil (25, 31) zur Steuerung der Druckluftverbindung zwischen der Hauptluftleitung (1) und der Ladedrossel (19) in Wechselwirkung steht.

3. Bremseinrichtung nach Anspruch 2,
dadurch gekennzeichnet,
daß die Membran (23) in einem Gehäuse (22) einen mit der Steuerkammer (10) verbundenen Raum (27) mit der Feder (26) von einem mit der Ladedrossel (19) verbundenen Raum (28) abtrennt und daß das Ventil (25, 31) eine Öffnung zwischen einem mit der Hauptluftleitung (1) verbundenen Raum (29) und dem mit der Ladedrossel (19) verbundenen Raum (28) steuert.

4. Bremseinrichtung nach Anspruch 3,
dadurch gekennzeichnet,
daß ein Vorratsbehälter (40) an den mit der Ladedrossel (19) verbundenen Raum (28) der Druckdifferenzhalteeinrichtung (21) angeschlossen ist.

5. Bremseinrichtung nach einem der Ansprüche 1 bis 4,
dadurch gekennzeichnet,
daß zwischen der Druckdifferenzhalteeinrichtung (21) und der Ladedrossel (19) ein Betriebsart-Umschalter (20) mit einem Absperrventil (34) und einer dazu parallelgeschalteten Drossel (35) angeordnet ist.

6. Bremseinrichtung nach einem der vorhergehenden Ansprüche,
dadurch gekennzeichnet,
daß an dem Zweidruckventil (5) eine Umschaltvorrichtung zur Umstellung der Bremseinrichtung von mehrlösigem zu einlösigem Betrieb angeordnet ist.

7. Bremseinrichtung nach einem der Ansprüche 1 bis 6,
dadurch gekennzeichnet,
daß einer mit der Hauptluftleitung (1) verbundenen Hauptkammer (9) des Zweidruckventils (5) ein von dessen Membran (7) gesteuertes Druckminderventil (57, 59) zugeordnet ist.

## Claims

1. A pneumatic braking device for rail vehicles, consisting of
- at least one air supply tank (40),
- at least one pneumatic braking cylinder (3), and
- at least one control valve (2) for controlling the filling and venting of the brake cylinder (3), comprising a double pressure valve (5) connected to the main air supply line (1) for the generation of a control pressure for the brake cylinders (3) by means of a fixed filling or loading throttle (19),
characterized in that
the control valve (2) comprises a pressure difference holding means (21) associated to the double pressure valve (5), holding in each release operation the pressure difference at the loading throttle (19) at a predetermined value.

2. The braking device according to claim 1,
characterized in that
the pressure difference holding means (21) comprises a membrane (23) acted upon, for one thing, by a spring (26) and the pressure in a control chamber (10) of the double pressure valve (5) and, for another, by the pressure upstream of the loading throttle (19), and interacts with a valve (25, 31) for control of the compressed air connection between the main air supply line (1) and the loading throttle (19).

3. The braking device according to claim 2,
characterized in that
the membrane (23) in a housing (22) separates a chamber (27) with the spring (26), connected to the control chamber (10), from a chamber (28) connected to the loading throttle (19), and in that the valve (25, 31) controls an opening between a chamber (29) connected to the main air supply line (1) and the chamber (28) connected to the loading throttle (19).

4. The braking device according-to claim 3,
characterized in that
a supply tank (40) communicates with the chamber (28) of the pressure difference holding means (21), connected to the loading throttle (19).

5. The braking device according to one of claims 1 to 4,
characterized in that
between the pressure difference holding means (21) and the loading throttle (19) an operating mode change-over switch (20) including a shutoff valve (34) and a throttle (35) connected in parallel thereto is disposed.

6. The braking device according to one of the preceding claims,
characterized in that
on the double pressure valve (5) a change-over means for changing the braking device over from graduated to direct release operation is arranged.

7. The braking device according to one of claims 1 to 6,
characterized in that
to a main chamber (9) of the double pressure valve (5), connected to the main air supply line (1), a pressure relief valve (57, 59) controlled by its membrane (7) is associated.

## Revendications

1. Dispositif de freinage pneumatique pour véhicules ferroviaires, constitué par
- au moins un réservoir d'air (40),
- au moins un cylindre de frein pneumatique (3), et
- au moins une soupape de commande (2) pour commander le remplissage et l'aération du cylindre de frein (3), une soupape de pression double (5) raccordée à une conduite d'air principale (1) pour produire une pression de commande pour les cylindres de frein (3) à l'aide d'un premier étranglement de remplissage ou de chargement (19),
caractérisé en ce
que la soupape de commande (2) comporte un dispositif (21) de maintien d'une différence de pression, qui est associé à la soupape de pression double (5) et qui, lors de chaque processus de desserrage, maintient à une valeur prédéterminée la différence de pression présente au niveau de l'étranglement de charge (19).

2. Dispositif de freinage selon la revendication 1, caractérisé en ce que le dispositif (21) de maintien de la différence de pression comporte une membrane (23), qui d'une part est chargée par un ressort et par la pression régnant dans une chambre de commande (10) de la soupape de pression double (5) ainsi que d'autre part par la pression située en amont de l'étranglement de charge (19) et coopère avec une soupape (25,31) pour commander la liaison d'air comprimé entre la conduite d'air principale (1) et l'étranglement de charge (19).

3. Dispositif de freinage selon la revendication 2, caractérisé en ce que la membrane (23) située dans un boîtier (22) sépare un espace (27) relié à la chambre de commande (10) et comportant le ressort (26) par rapport à un espace (28) relié à l'étranglement de charge (19), et que la soupape (25,31) commande une ouverture entre l'espace (29) relié à la conduite d'air principale (1), et l'espace (28) relié à l'étranglement de charge (19).

4. Dispositif de freinage selon la revendication 3, caractérisé en ce qu'un réservoir (40) est raccordé à l'espace (28), qui est relié à l'étranglement de charge (19), du dispositif (21) de maintien de la différence de pression.

5. Dispositif de freinage selon l'une des revendications 1 à 4, caractérisé en ce qu'un commutateur (20) des types de fonctionnement, équipé d'une soupape de sectionnement (34) et d'un étranglement (35) branché en parallèle avec cette dernière, est disposé entre le dispositif (21) de maintien de la différence de pression et l'étranglement de charge (19).

6. Dispositif de freinage selon l'une des revendications précédentes, caractérisé en ce qu'un dispositif de commutation sert à commuter le dispositif de freinage depuis un fonctionnement modérable au desserrage et un fonctionnement non modérable au desserrage.

7. Dispositif de freinage selon l'une des revendications 1 à 6, caractérisé en ce qu'à une chambre principale (9), reliée à la conduite d'air principale (1), de la soupape de pression double est associée une soupape de détente de pression (57,59) commandée par la membrane (7) de la soupape de pression double.
